# EUROPEAN PATENT SPECIFICATION

(11) **EP 2 736 302 B1**
(45) Date of publication and mention of the grant of the patent: **10.07.2019**
(21) Application number: 12831361.6
(22) Date of filing: 20.07.2012
(51) Int. Cl.: H04W 88/02, H04M 1/725, G06F 9/445

(54) **METHOD AND MOBILE TERMINAL FOR CONFIGURING APPLICATION MODE**
VERFAHREN UND MOBILES ENDGERÄT ZUM KONFIGURIEREN VON ANWENDUNGSMODI
PROCÉDÉ ET TERMINAL MOBILE POUR CONFIGURER UN MODE D'APPLICATION

(30) Priority: 13.09.2011 CN 201110269636
(43) Date of publication of application: 28.05.2014
(73) Proprietor: Huawei Device Co., Ltd., Dongguan, Guangdong 523808 (CN)
(72) Inventor: WANG, Pei, Shenzhen Guangdong 518129 (CN); YANG, Zhiyan, Shenzhen Guangdong 518129 (CN)
(74) Representative: Pfenning, Meinig & Partner mbB
(86) International application number: PCT/CN2012/078943
(87) International publication number: WO 2013/037246

(56) References cited:
- EP-A1- 0 977 304
- EP-A2- 2 275 907
- CN-A- 101 232 665
- CN-A- 101 820 456
- CN-A- 102 387 248
- US-A1- 2004 235 464
- US-A1- 2007 239 813
- US-A1- 2009 083 331
- US-B1- 7 916 015

## Description

### TECHNICAL FIELD

Embodiments of the present invention relate to the field of electronic communications, and in particular, to a method and a mobile terminal for configuring an application mode.

### BACKGROUND

With the popularization of intelligent machines, mobile terminals have become increasingly indispensable to people. However, people often face different life scenarios or work scenarios. In these different scenarios, a mobile terminal needs to be adaptively changed to different application modes. For example, during a meeting, the application mode of the mobile terminal needs to be set to mute or vibration, and keyboard locked; in an office, the application mode of the mobile terminal needs to be set to automatically decreasing the volume, turning off vibration, adjusting screen luminance to adapt to indoor light, turning on Wi-Fi, turning off GPS, and so on; at home, the application mode of the mobile terminal needs to be set to adjusting the volume to a medium level, extending an interval for automatic locking of the screen to 20 minutes, and turning on Wi-Fi.

A user needs to manually set the application mode of the mobile terminal to a desired application mode, so that the user uses an appropriate application mode in a corresponding scenario. However, after the mobile terminal enters a different scenario, the user needs to manually configure the application mode, leading to a problem that the operation of configuring the application mode is complex.

US 7,916,015 B1 relates to a monitoring system and method for detecting environmental conditions, the monitoring system including a sensing unit including a plurality of sensors for obtaining data related to environmental conditions, a controller interfaced with the sensing unit for receiving and encoding the data related to environmental conditions into a predetermined format using a base64 encoding scheme, and a communication device for receiving the data in the predetermined format from the controller, forming an e-mail message (which can be further encoded) including instructions on how to decode the email message and transmitting the e-mail message including the data in the predetermined format to at least one predetermined recipient.

EP 0 977 304 A1 relates to a radio communication apparatus including a transceiver coupled to an antenna structure with many directional antennas that form a radiation pattern. The antenna structure gives greater importance to certain directions of transmission. A power regulation device is controlled by a control element for modifying the radiation pattern. The control element includes switches for selectively activating/deactivating the directional antennas to modify the radiation pattern. A proximity detection device measures at least one proximity parameter and feeds the control element with a proximity indication for controlling the power regulation device to reduce the radiation pattern in the direction of the radio communication apparatus user. The proximity detection device includes a humidity and/or a temperature detector.

US 2007/0239813 A1 relates to a system and method of using a context vector and database for location applications can include a transceiver, a plurality of environmental sensors including at least two location technology devices, and a processor coupled to the transceiver and the plurality of environmental sensors. The processor can be programmed to sense an environmental condition for a given location, define a context vector for the given location, detect a context transition corresponding to a change in the environmental condition, and modify an operation of the at least two location technology devices based on the context transition detected.; The processor can be further programmed to form a new context vector based on the context transition and attempt to match the new context vector with a pre-stored context vector.

EP 2 275 907 A2 discusses ground detection of a touch screen device, including components for monitoring conditions of the device and for analyzing said condition in order to determine grounding conditions.

### SUMMARY

Embodiments of the present invention provide a method for configuring an application mode in one aspect, and provide a mobile terminal in another aspect, which can solve a problem that the operation of configuring the application mode is complex.

In order to achieve the foregoing objectives, the embodiments of the present invention adopt the following technical solutions:

A method for configuring an application mode of a terminal is proposed which includes the steps of: detecting an object material currently in contact with the terminal by determining object material data, wherein the object material data comprise inductance and/or capacitance data; comparing the detected object material data with object material data stored in the terminal; and when the detected object material data is the same as the object material data stored in the terminal, configuring an application mode of the terminal as an application mode corresponding to the object material data stored in the terminal. Furthermore, when the detected object material data is different from all object material data stored in the terminal, the method further comprises the steps of: saving, to the terminal, the detected object material data and an application mode input by a user. Also, the terminal is one of the following types of devices: a mobile phone, a man-machine interaction terminal, an e-book, an audio and video player or a personal digital assistant. Furthermore, when the detected object material is a case material of a notebook computer, the method further comprises the steps of enabling a wireless connection function and performing data synchronization between the terminal and the notebook computer.

In the proposed method the step of detecting the object material currently in contact with the terminal may further comprise detecting auxiliary information; the step of comparing may further comprise comparing the detected object material and auxiliary information with object material data and auxiliary information that are stored in the terminal; and, when the detected object material and auxiliary information are the same as the object material and the auxiliary information that are stored in the terminal, the step of configuring may further comprise configuring an application mode of the terminal as an application mode corresponding to the object material data and the auxiliary information that are stored in the terminal.

Furthermore, a mobile terminal is proposed which includes: a detecting module, configured to detect an object material currently in contact with the terminal by determining object material data, wherein the object material data comprise inductance and/or capacitance data; a storing module, configured to store the detected object material data and an application mode input by a user; a comparing module, configured to compare the object material data detected by the first detecting module with object material data stored in the first storing module; and a configuring module, configured to: when a comparison result of the comparing module is that the object material data detected by the detecting module is the same as the object material data stored in the first storing module, configure an application mode of the terminal as an application mode corresponding to the object material data stored in the terminal. The mobile terminal further comprises an adding module, wherein, when the comparison result of the comparing module is that the object material data detected by the detecting module is different from all object material data stored in the storing module, the adding module is configured to send, to the storing module, the object material data detected by the detecting module and the application mode input by the user. Also, the terminal is one of the following types of devices: a mobile phone, a man-machine interaction terminal, an e-book, an audio and video player or a personal digital assistant. Furthermore, the mobile terminal further comprises a wireless connection enabling module, wherein, when the detected object material is a case material of a notebook computer, the wireless connection enabling module is configured to enable a wireless connection function and to perform data synchronization between the terminal and the notebook computer.

The mobile terminal may be configured such that: the detecting module is further configured to detect auxiliary information; the storing module is further configured to store the detected auxiliary information; the comparing module is further configured to compare the object material data and the auxiliary information that are detected by the detecting module with object material data and auxiliary information that are stored in the storing module; and the configuring module is configured to: when a comparison result of the comparing module is that the object material data and the auxiliary information that are detected by the detecting module are the same as the object material data and the auxiliary information that are stored in the storing module, configure an application mode of the terminal as an application mode corresponding to the object material data and the auxiliary information that are stored in the storing module.

In the method and device provided by the embodiments of the present invention, the mobile terminal first detects an object material currently in contact with the terminal by determining object material data, wherein the object material data comprise inductance and/or capacitance data; compares the
detected object material data with object material data stored in the terminal; and when the detected object material data is the same as the object material data stored in the terminal, configures a user application mode of the terminal as an application mode corresponding to the object material data stored in the terminal; or, optionally,
the mobile terminal first detects an object material currently in contact with the terminal by determining object material data, wherein the object material data comprise inductance and/or capacitance data, and auxiliary information; compares the detected object material data and auxiliary information with object material data and auxiliary information that are stored in the terminal; and when the detected object material data and auxiliary information are the same as the object material data and the auxiliary information that are stored in the terminal, configures an application mode of the terminal as an application mode corresponding to the object material data and the auxiliary information that are stored in the terminal.

To sum up, the technical solutions provided by embodiments of the present invention avoid a process of manually configuring an application mode by a user, thereby solving the problem that the operation of configuring the application mode is complex. Therefore, the method and device provided by the embodiments of the present invention may automatically configure the application mode of the terminal according to the detected object material currently in contact with the terminal, or according to the detected object material currently in contact with the terminal and auxiliary information, thereby simplifying an operation of configuring the application mode.

### BRIEF DESCRIPTION OF DRAWINGS

To describe the technical solutions in the embodiments of the present invention or in the prior art more clearly, the following briefly introduces accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart of a method for configuring an application mode according to an embodiment of the present invention;
FIG. 2 is a flowchart of another method for configuring an application mode according to an embodiment of the present invention;
FIG. 3 is a schematic flowchart of a method for configuring an application mode according to an embodiment of the present invention;
FIG. 4 is a schematic flowchart of another method for configuring an application mode according to an embodiment of the present invention;
FIG. 5 is a schematic structural diagram of a mobile terminal according to an embodiment of the present invention;
FIG. 6 is a schematic structural diagram of another mobile terminal according to an embodiment of the present invention;
FIG. 7 is a schematic structural diagram of still another mobile terminal according to an embodiment of the present invention;
FIG. 8 is a schematic structural diagram of a mobile terminal according to an embodiment of the present invention;
FIG. 9 is a schematic structural diagram of another mobile terminal according to an embodiment of the present invention; and
FIG. 10 is a schematic structural diagram of still another mobile terminal according to an embodiment of the present invention.

### DESCRIPTION OF EMBODIMENTS

The following clearly and completely describes the technical solutions in the embodiments of the present invention with reference to the accompanying drawings in the embodiments of the present invention.

### Embodiment 1

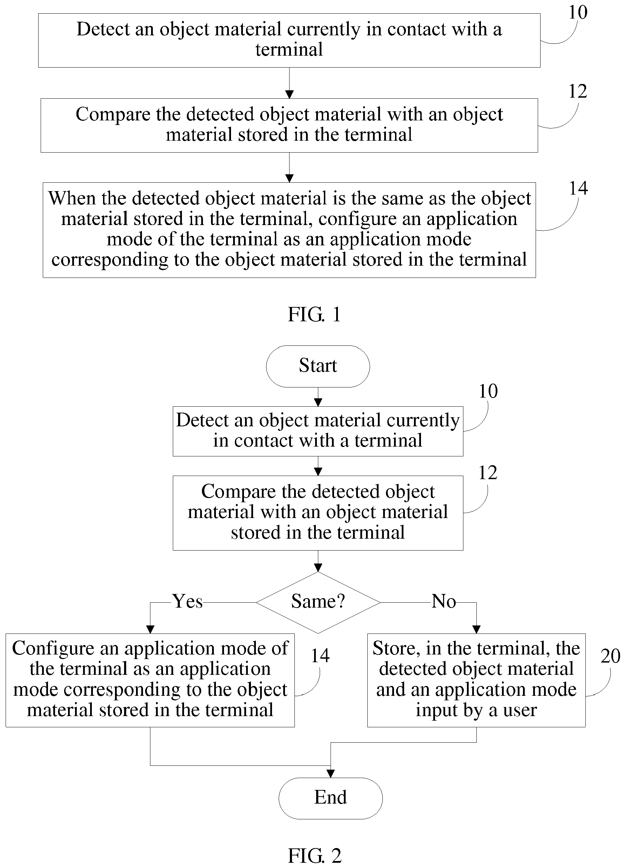

An embodiment of the present invention provides a method for configuring an application mode, and as shown in FIG. 1, the method includes the following steps:
Step 10: Detect an object material currently in contact with a terminal.

It should be noted that, a sensor for detecting an object material, for example, a temperature tactile sensor, a multifunctional tactile sensor for recognizing a material, and a heat sensation sensor for recognizing a material, needs to be installed on the terminal.

The following uses the multifunctional tactile sensor for recognizing a material as an example to briefly describe a principle and function of the sensor. The multifunctional tactile sensor for recognizing a material has a simple planar structure, but has functions of three sensors. The sensor is formed by two metal coils fabricated on a flexible insulation sheet, and has four input and output terminals. When used as an inductance coil, the sensor presents an inductive function, and may recognize metal and semiconductor materials; when viewed as a planar capacitor, the sensor presents a capacitive function, and may recognize an insulation material; when used in a temperature control circuit, the sensor presents a temperature sensing function. The sensor is capable of recognizing some typical materials, for example, iron, aluminum, copper, brass, rubber, wood, organic glass, foamed plastic, and the like.

Optionally, time of turning on the sensor for detecting an object material of the terminal may be set to always turned on, may also be set to periodically turned on, and may also be set to manually turned on by a user.

Step 12: Compare the detected object material with an object material stored in the terminal.

It should be noted that, the object material stored in the terminal may be preset in the terminal before a cell phone is delivered from a factory, and may also be manually set and stored in the terminal by the user.

Step 14: When the detected object material is the same as the object material stored in the terminal, configure an application mode of the terminal as an application mode corresponding to the object material stored in the terminal.

It should be noted that, the detected object material is compared with object materials stored in the terminal one by one, and when the detected object material is the same as an object material stored in the terminal, the application mode of the terminal is configured to an application mode corresponding to the object material stored in the terminal. The application mode is usage of the terminal by the user, for example, mute, screen brightness, screen locked, Wi-Fi, automatic synchronization, Bluetooth, infrared, vibration, and battery charge level. If the detected object material is wood, and wood is found through searching among the object materials stored in the terminal, an application mode corresponding to wood is further searched for. For example, if an application mode corresponding to wood is mute and screen locked, the application mode of the terminal is automatically set to mute and screen locked.

Further, as shown in FIG. 2, when the detected object material is different from all object materials stored in the terminal, perform step 20: Store, in the terminal, the detected object material and an application mode input by the user. It should be noted that, when the detected object material is different from all object materials stored in the terminal, a reminder may be displayed to the user, asking the user whether to add the object material. If the user selects not to add the object material, the terminal discards the detected object material; if the user selects to add the object material, an application mode setting interface is displayed, and the user may set the application mode of the terminal according to the application mode that is to be used for the object material. Finally, the terminal stores, in a storage medium of the terminal, the detected object material and the application mode input by the user. Because manually adding, to the storage medium of the terminal by the user, a detected object material and an application mode input by the user is supported, an increasing number of object materials and application modes corresponding to the object materials will be stored in the terminal, so that a possibility for the terminal to select an object material that is the same as the detected object material greatly increases.

Still further, when the detected object material is a case material of a notebook computer, the terminal enables a wireless connection function, so that the terminal and the notebook computer perform data synchronization, where enabling the wireless connection function may be enabling a Bluetooth connection, and may also be enabling an infrared connection. For example, assuming that the object material of the case material of the notebook computer is metal, the wireless connection function is enabled when the detected object material is metal.

It should be noted that, to implement the function of synchronization between the terminal and the notebook computer, support of synchronization software is required. The synchronization software may be installed in the notebook computer, and in this case, the synchronization software in the notebook computer needs to be always on and keep monitoring a wireless connection, the wireless connection function of the notebook computer is always enabled, and the terminal and the notebook computer may automatically perform data synchronization after a wireless connection is established between the terminal and the notebook computer; or
the synchronization software may also be installed in the terminal, the synchronization software installed in the terminal needs to be started after the wireless connection function of the terminal is enabled, and the terminal and the notebook computer may automatically perform data synchronization after a wireless connection is established between the terminal and the notebook computer.

In addition, common case materials of notebook computers include an alloy case and a plastic case, where the alloy case includes an aluminum-magnesium alloy and a titanium alloy, and the plastic case includes carbon fiber, polycarbonate PC, and ABS engineering plastic. It should be noted that, object materials of the common case materials of notebook computers may be stored before the terminal is delivered from the factory, and object materials of notebook computers that have been in contact with the cell phone may also be stored by the user during use of the terminal.

Because data synchronization between the terminal and the notebook computer may be enabled as long as the terminal contacts the notebook computer, relevant settings for the user to manually perform data synchronization are omitted, thereby effectively simplifying an operation of configuring the application mode.

Optionally, in consideration of security, before the terminal and the notebook computer perform data synchronization, a prompt may be displayed, so that the user decides whether to perform data synchronization between the terminal and the notebook computer. Because whether to perform data synchronization is completely controlled by the user, security of the terminal is greatly improved, thereby providing good privacy protection for the user.

In the method provided by the embodiment of the present invention, a mobile terminal first detects an object material currently in contact with the terminal; compares the detected object material with an object material stored in the terminal; and when the detected object material is the same as the object material stored in the terminal, configures an application mode of the terminal as an application mode corresponding to the object material stored in the terminal. In this way, manual configuration of the application mode for the terminal by a user is omitted, thereby solving a problem that the operation of configuring the application mode is complex. Therefore, with the method provided by the embodiment of the present invention, the application mode of the terminal may be automatically configured according to the detected object material currently in contact with the terminal, thereby simplifying the operation of configuring the application mode.

### Embodiment 2

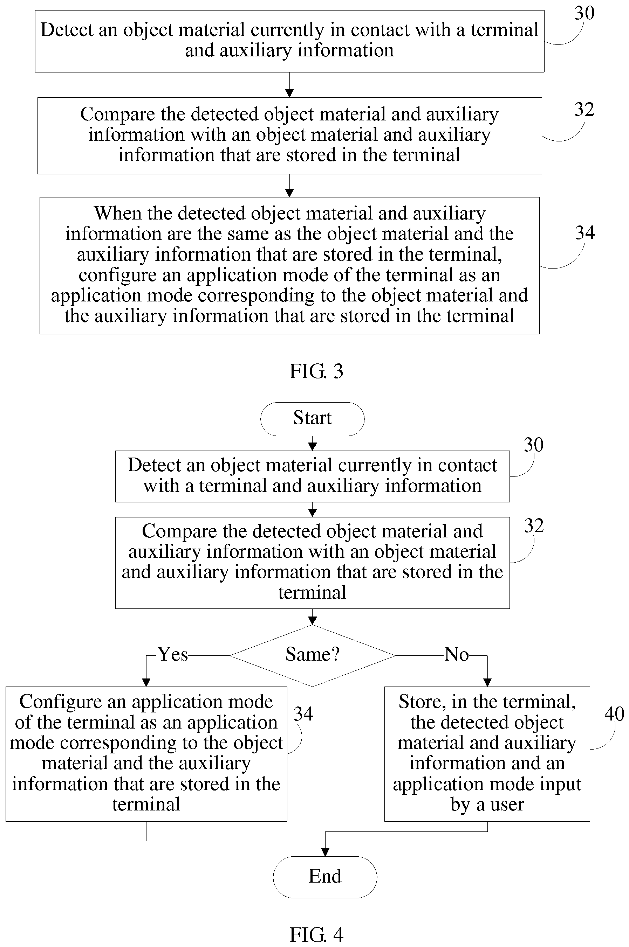

An embodiment of the present invention provides another method for configuring an application mode, and as shown in FIG. 3, the method includes the following steps:
Step 30: Detect an object material currently in contact with a terminal and auxiliary information.

A sensor for detecting an object material and setting time of turning on the sensor have been described in Embodiment 1, and details are not repeatedly described herein.

It should be noted that, the auxiliary information is used to assist in detecting the object material currently in contact with the terminal, and the auxiliary information may include a combination of one or more of the following: geographical position, time, date, movement status of the terminal, and brightness status of an environment where the terminal is located. For example, the auxiliary information may include a combination of one or more of the following: geographical position, time, date, movement status of the terminal, and brightness status of an environment where the terminal is located. For a specific example, the auxiliary information may use a combination of the geographical position, time, and date, and in this case, the terminal detects three values, that is, values of the geographical position, time, and date; the auxiliary information may also use the movement status of the terminal, and in this case, the terminal detects one value, that is, a value of the movement status of the terminal; the auxiliary information may also use a combination of the geographical position, time, date, and brightness status of an environment where the terminal is located, and in this case, the terminal detects four values, that is, values of the geographical position, time, date, and brightness status of the environment where the terminal is located. It should be noted that, the auxiliary information may be specified by a user according to a personal requirement, and may also be specified by default when the system is delivered from a factory.

It should be noted that, geographical position information may be obtained through a GPS (Global Positioning System), a base station, or a Wi-Fi (wireless fidelity) access point; the movement status of the terminal may be obtained by using an acceleration sensor in the cell phone, that is, the acceleration sensor in the cell phone may be used to obtain whether the terminal is currently in a moving state; and the brightness status of the environment where the terminal is located may be obtained by using an ambient light sensor in the cell phone.

Step 32: Compare the detected object material and auxiliary information with an object material and auxiliary information that are stored in the terminal.

It should be noted that, the object material stored in the terminal may be preset in the terminal before the cell phone is delivered from a factory, and may also be manually set and stored in the terminal by the user.

It should be noted that, the detected object material and auxiliary information are compared with object materials and auxiliary information that are stored in the terminal one by one. For example, it is assumed that the auxiliary information uses the geographical position, and the object materials and auxiliary information that are stored in the terminal are as follows: 1. wood, Longhua in Shenzhen; 2. metal, Longhua in Shenzhen; and 3. wood, Bantian in Shenzhen. When the detected object material is wood, and the detected geographical position is Bantian in Shenzhen, the detected object material and auxiliary information is compared with the object materials and auxiliary information that are stored in the terminal one by one that, record 1 and record 2 are different from the detected object material and auxiliary information, and record 3 is the same as the detected object material and auxiliary information. Herein, the object material is described in a recording manner that may be understood by people, such as wood and metal, but the object material may be actually recorded by the terminal in another manner, such as temperature and spectrum. In addition, only a manner of comparing the detected object material and auxiliary information with the object materials and the auxiliary information that are stored in the terminal, and determining whether a comparison result is the same are described by using an example herein, and other comparing manners and determining whether the comparison result is the same are not limited.

Step 34: When the detected object material and auxiliary information are the same as the object material and the auxiliary information that are stored in the terminal, configure an application mode of the terminal as an application mode corresponding to the object material and the auxiliary information that are stored in the terminal.

For example, it is assumed that the auxiliary information uses the geographical position, and object materials and auxiliary information that are stored in the terminal and application modes that correspond to the object materials and the auxiliary information and are stored in the terminal are as follows: 1. wood, Longhua in Shenzhen, vibration and screen locked; 2. metal, Longhua in Shenzhen, increasing the volume and turning off the screen; and 3. wood, Bantian in Shenzhen, mute. When the detected object material is wood, and the detected geographical position is Bantian in Shenzhen, the detected object material and auxiliary information is compared with the object materials and auxiliary information that are stored in the terminal one by one that, record 1 and record 2 are different from the detected object material and auxiliary information, and record 3 is the same as the detected object material and auxiliary information. Therefore, the application mode of the terminal is configured as the application mode corresponding to the detected object material and auxiliary information, that is, the application mode of the terminal is set to mute.

Further, as shown in FIG. 4, when the detected object material and auxiliary information are different from all object materials and auxiliary information that are stored in the terminal, perform step 40: Store, in the terminal, the detected object material and auxiliary information and an application mode input by the user. It should be noted that, when the detected object material and auxiliary information are different from all object materials and auxiliary information that are stored in the terminal, a reminder may be displayed to the user, asking the user whether to add the object material and auxiliary information. If the user selects not to add the object material and auxiliary information, the terminal discards the detected object material and auxiliary information; if the user selects to add the object material and auxiliary information, an application mode setting interface is displayed, and the user may set the application mode of the terminal according to the application mode that is to be used for the object material and the auxiliary information. Finally, the terminal stores, in a storage medium of the terminal, the detected object material and auxiliary information and the application mode input by the user. Because manually adding, to the storage medium of the terminal by the user, a detected object material and auxiliary information and an application mode input by the user is supported, an increasing number of object materials and auxiliary information and application modes corresponding to the object materials and the auxiliary information will be stored in the terminal, so that a possibility for the terminal to select an object material and auxiliary information that are the same as the detected object material and auxiliary information greatly increases.

Still further, when the detected object material is a case material of a notebook computer and the auxiliary information meets a preset condition, a wireless connection function is enabled, so that the terminal and the notebook computer perform data synchronization, where enabling the wireless connection function may be enabling a Bluetooth connection, and may also be enabling an infrared connection. For example, assuming that the object material of the case material of the notebook computer is metal and the geographical position is Longhua in Shenzhen, the wireless connection function is enabled when the detected object material is metal and the geographical position is Longhua in Shenzhen.

It should be noted that, to implement the function of synchronization between the terminal and the notebook computer, support of synchronization software is required. The synchronization software may be installed in the notebook computer, and in this case, the synchronization software in the notebook computer needs to be always on and keep monitoring a wireless connection, the wireless connection function of the notebook computer is always enabled, and the terminal and the notebook computer may automatically perform data synchronization after a wireless connection is established between the terminal and the notebook computer; or
the synchronization software may also be installed in the terminal, the synchronization software installed in the terminal needs to be started after the wireless connection function of the terminal is enabled, and the terminal and the notebook computer may automatically perform data synchronization after a wireless connection is established between the terminal and the notebook computer.

In addition, common case materials of notebook computers include an alloy case and a plastic case, where the alloy case includes an aluminum-magnesium alloy and a titanium alloy, and the plastic case includes carbon fiber, polycarbonate PC, and ABS engineering plastic. It should be noted that, object materials of the common case materials of notebook computers may be stored before the terminal is delivered from the factory, and object materials of notebook computers that have been in contact with the cell phone may also be stored by the user during use of the terminal.

Because the data synchronization between the terminal and the notebook computer can be enabled as long as the terminal contacts the notebook computer and the auxiliary information meets a preset condition, relevant settings for the user to manually perform data synchronization are omitted, thereby effectively simplifying an operation of configuring the application mode.

Optionally, in consideration of security, before the terminal and the notebook computer perform data synchronization, a prompt may be displayed, so that the user decides whether to perform data synchronization between the terminal and the notebook computer. Because whether to perform data synchronization is completely controlled by the user, security of the terminal is greatly improved, thereby providing good privacy protection for the user.

In the method provided by the embodiment of the present invention, a mobile terminal first detects an object material currently in contact with the terminal and auxiliary information; compares the detected object material and auxiliary information with an object material and auxiliary information that are stored in the terminal; and when the detected object material and auxiliary information are the same as the object material and the auxiliary information that are stored in the terminal, configures an application mode of the terminal as an application mode corresponding to the object material and the auxiliary information that are stored in the terminal. In this way, manual configuration of the application mode for the terminal by a user is omitted, thereby solving a problem that the operation of configuring the application mode is complex. Therefore, with the method provided by the embodiment of the present invention, the application mode of the terminal may be automatically configured according to the detected object material currently in contact with the terminal and auxiliary information, thereby simplifying the operation of configuring the application mode.

### Embodiment 3

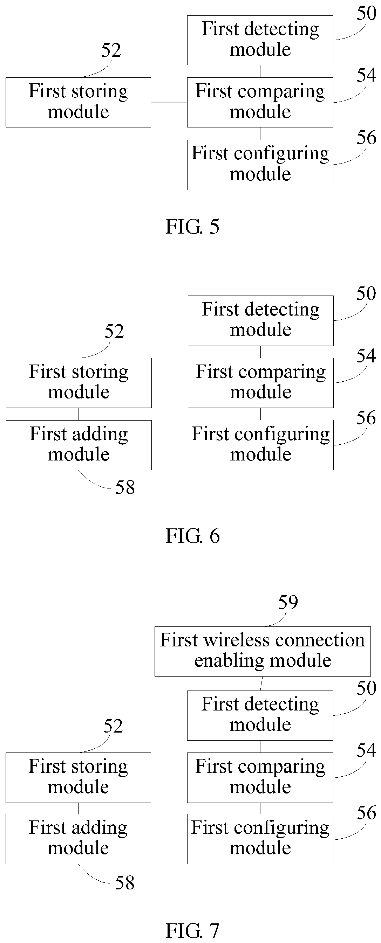

As shown in FIG. 5, an embodiment of the present invention provides a mobile terminal, including:
a first detecting module 50, configured to detect an object material currently in contact with the terminal; a first storing module 52, configured to store the detected object material and an application mode input by a user; a first comparing module 54, configured to compare the object material detected by the first detecting module 50 with an object material stored in the first storing module 52; and a first configuring module 56, configured to: when a comparison result of the first comparing module 54 is that the object material detected by the first detecting module 50 is the same as the object material stored in the first storing module 52, configure an application mode of the terminal as an application mode corresponding to the object material stored in the terminal.

Further, as shown in FIG. 6, when the comparison result of the first comparing module is that the object material detected by the first detecting module is different from all object materials stored in the first storing module, the mobile terminal further includes: a first adding module 58, configured to send, to the first storing module 52, the object material detected by the first detecting module 50 and the application mode input by the user.

Still further, as shown in FIG. 7, when the detected object material is a case material of a notebook computer, the mobile terminal further includes: a first wireless connection enabling module 59, configured to enable a wireless connection function, so that the terminal and the notebook computer perform data synchronization.

For operation steps of the modules in this device embodiment, reference may be made to corresponding content in Embodiment 1, for effects that can be brought about by the operation steps, reference may also be made to corresponding content in Embodiment 1, and details are not repeatedly described herein.

In the device provided by the embodiment of the present invention, the first detecting module 50 of the mobile terminal first detects an object material currently in contact with the terminal; the first comparing module 54 compares the object material detected by the first detecting module 50 with an object material stored in the first storing module 52; and when a comparison result of the first comparing module 54 is that the object material detected by the first detecting module 50 is the same as the object material stored in the first storing module 52, an application mode of the terminal is configured to an application mode corresponding to the object material stored in the terminal. In this way, manual configuration of the application mode for the terminal by a user is omitted, thereby solving a problem that the operation of configuring the application mode is complex. Therefore, with the device provided by the embodiment of the present invention, the application mode of the terminal may be automatically configured according to the detected object material currently in contact with the terminal and auxiliary information, thereby simplifying the operation of configuring the application mode.

In Embodiment 1 and Embodiment 3 of the present invention, the mobile terminal may be a device such as a mobile phone, a navigator, a man-machine interaction terminal, an e-book, an audio and video player or a personal digital assistant PDA, or another terminal device with a display function, but is not limited to the foregoing devices. For example, when the mobile terminal is a mobile phone, that is, a cell phone, the cell phone may include the following parts: a case, a circuit board, a processor, a touchscreen, a radio frequency circuit, a microphone, a speaker, a power supply, and so on. The touchscreen is disposed on the case, the circuit board is disposed inside a space enclosed by the case, and the processor and the radio frequency circuit are disposed on the circuit board. Furthermore, the processor includes the first detecting module 50, the first storing module 52, the first comparing module 54, and the first configuring module 56 in Embodiment 3 of the present invention. In addition, when the comparison result of the first comparing module is that the object material detected by the first detecting module 50 is different from all object materials stored in the first storing module 52, the processor further includes the first adding module 58; and when the detected object material is a case material of a notebook computer, the processor further includes the first wireless connection enabling module 59. Specifically, the processor is configured to process data, which is input through the touchscreen, and/or output a processed data result through the touchscreen. The radio frequency circuit is configured to establish communication between the cell phone and a wireless network, and implement data receiving and sending between the cell phone and the wireless network. The microphone is configured to collect a sound and convert the collected sound to sound data, so that the cell phone sends the sound data to the wireless network through the radio frequency circuit. The speaker is configured to restore the sound data to a sound and play the sound for the user, where the sound data is received by the cell phone from the wireless network through the radio frequency circuit. The power supply is configured to supply power to all circuits or components of the cell phone.

### Embodiment 4

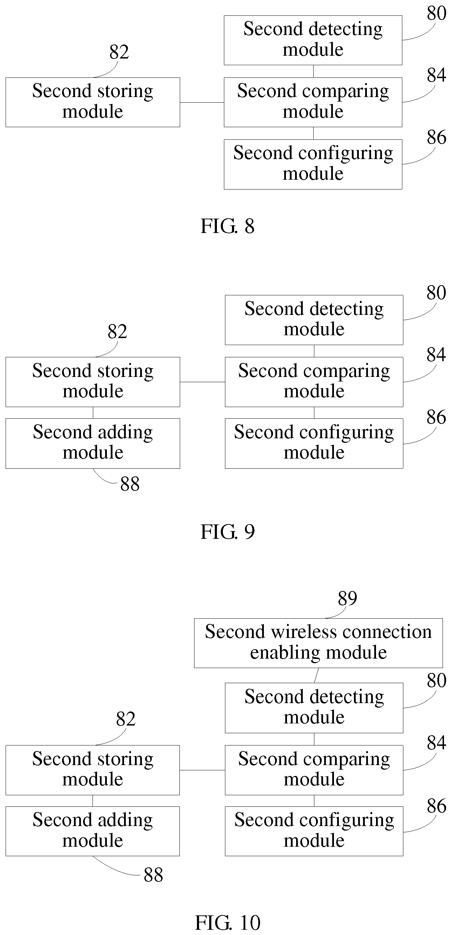

As shown in FIG. 8, an embodiment of the present invention provides another mobile terminal, including: a second detecting module 80, configured to detect an object material currently in contact with the terminal and auxiliary information; a second storing module 82, configured to store the detected object material and auxiliary information and an application mode input by a user; a second comparing module 84, configured to compare the object material and the auxiliary information that are detected by the second detecting module 80 with the object material and the auxiliary information that are stored in the second storing module 82; and a second configuring module 86, configured to: when a comparison result of the second comparing module 84 is that the object material and the auxiliary information that are detected by the second detecting module are the same as the object material and the auxiliary information that are stored in the second storing module 82, configure an application mode of the terminal as an application mode corresponding to the object material and the auxiliary information that are stored in the second storing module 82.

Further, as shown in FIG. 9, when the comparison result of the second comparing module 84 is that the object material and the auxiliary information that are detected by the second detecting module 80 are different from all object materials and auxiliary information that are stored in the second storing module 82, the mobile terminal further includes a second adding module 88, configured to send, to the second storing module 82, the application mode input by the user and the detected object material and auxiliary information.

Still further, as shown in FIG. 10, when the detected object material is a case material of a notebook computer and the auxiliary information meets a preset condition, the mobile terminal further includes a second wireless connection enabling module 89, configured to enable a wireless connection function,so that the terminal and the notebook computer perform data synchronization.

In this device embodiment, for operation steps of the modules, reference may be made to corresponding content in Embodiment 2, for effects that can be brought about by the operation steps, reference may also be made to corresponding content in Embodiment 2, and details are not repeatedly described herein.

In the device provided by the embodiment of the present invention, the first detecting module 80 of the mobile terminal first detects an object material currently in contact with the terminal and auxiliary information; the first comparing module 84 compares the object material and the auxiliary information that are detected by the first detecting module 80 with an object material and auxiliary information that are stored in the first storing module 82; and when a comparison result of the first comparing module 84 is that the object material and the auxiliary information that are detected by the first detecting module 80 are the same as the object material and the auxiliary information that are stored in the first storing module 82, an application mode of the terminal is configured to an application mode corresponding to the object material and the auxiliary information that are stored in the terminal. In this way, manual configuration of the application mode for the terminal by a user is omitted, thereby solving a problem that the operation of configuring the application mode is complex. Therefore, with the device provided by the embodiment of the present invention, the application mode of the terminal may be automatically configured according to the detected object material currently in contact with the terminal and auxiliary information, thereby simplifying the operation of configuring the application mode.

In Embodiment 2 and Embodiment 4 of the present invention, the mobile terminal may be a device such as a mobile phone, a navigator, a man-machine interaction terminal, an e-book, an audio and video player or a personal digital assistant PDA, or another terminal device with a display function, but is not limited to the foregoing devices. For example, when the mobile terminal is a mobile phone, that is, a cell phone, the cell phone may include the following parts: a case, a circuit board, a processor, a touchscreen, a radio frequency circuit, a microphone, a speaker, a power supply, and so on. The touchscreen is disposed on the case, the circuit board is disposed inside a space enclosed by the case, and the processor and the radio frequency circuit are disposed on the circuit board. Furthermore, the processor includes the second detecting module 80, the second storing module 82, the second comparing module 84, and the second configuring module 86 in Embodiment 3 of the present invention. In addition, when the comparison result of the second comparing module is that the object material detected by the second detecting module 80 is different from all object materials stored in the second storing module 82, the processor further includes the second adding module 88; and when the detected object material is a case material of a notebook computer, the processor further includes the second wireless connection enabling module 89. Specifically, the processor is configured to process data, which is input through the touchscreen, and/or output a processed data result through the touchscreen. The radio frequency circuit is configured to establish communication between the cell phone and a wireless network, and implement data receiving and sending between the cell phone and the wireless network. The microphone is configured to collect a sound and convert the collected sound to sound data, so that the cell phone sends the sound data to the wireless network through the radio frequency circuit. The speaker is configured to restore the sound data to a sound and play the sound for the user, where the sound data is received by the cell phone from the wireless network through the radio frequency circuit. The power supply is configured to supply power to all circuits or components of the cell phone.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

It should be noted that in the foregoing method and device, the units included are divided only by functional logic, but is not limited to the preceding dividing, as long as the corresponding functions can be implemented; in addition, specific names of various functional units are intended to distinguish between the functional units, but not to limit the protection scope of the present invention.

It should also be understood that, although terms such as first and second may be used herein to describe various elements or data, these elements or data should not be limited to these terms. These terms are only used to distinguish the components or data from each other. For example, without departing from the scope of the present invention, a first module may also be called a second module, and similarly, a second module may be called a first module.

A person of ordinary skill in the art may understand that all or a part of the processes of the methods in the embodiments may be implemented by a computer program instructing relevant hardware. The program may be stored in a computer readable storage medium. When the program runs, the procedures of the foregoing method embodiments are performed. The foregoing storage medium may include: a magnetic disk, an optical disc, a read-only memory (Read-Only Memory, ROM) or a random access memory (Random Access Memory, RAM), and the like.

## Claims

1. A method for configuring an application mode of a terminal, comprising the steps of:
detecting (10) an object material currently in contact with the terminal by determining object material data, wherein the object material data comprise inductance and/or capacitance data;
comparing (12) the detected object material data with object material data stored in the terminal; and,
when the detected object material data is the same as the object material data stored in the terminal, configuring (14) an application mode of the terminal as an application mode corresponding to the object material data stored in the terminal;
wherein, when the detected object material data is different from all object material data stored in the terminal, the method further comprises the steps of:
saving (20), to the terminal, the detected object material data and an application mode input by a user;
wherein the terminal is one of the following types of devices: a mobile phone, a man-machine interaction terminal, an e-book, an audio and video player or a personal digital assistant;
wherein, when the detected object material is a case material of a notebook computer, the method further comprises the steps of:
enabling a wireless connection function and performing data synchronization between the terminal and the notebook computer.

2. The method according to claim 1, further comprising the steps of:
detecting (30) the object material currently in contact with the terminal by detecting auxiliary information;
comparing (32) the detected object material data and auxiliary information with object material data and auxiliary information that are stored in the terminal; and,
when the detected object material data and auxiliary information are the same as the object material data and the auxiliary information that are stored in the terminal, configuring (34) an application mode of the terminal as an application mode corresponding to the object material data and the auxiliary information that are stored in the terminal.

3. The method according to claim 2, wherein the auxiliary information comprises a combination of one or more of the following: geographical position, time, date, movement status of the terminal, and brightness status of an environment where the terminal is located.

4. The method according to claim 2 or 3, wherein, when the detected object material data and auxiliary information are different from all object material data and auxiliary information that are stored in the terminal, the method further comprises the steps of:
saving (40), to the terminal, the detected object material data and auxiliary information and an application mode input by a user.

5. The method according to claim 2 or 3, wherein, when the detected object material is a case material of a notebook computer and the auxiliary information meets a preset condition, the method further comprises the steps of:
enabling a wireless connection function and performing data synchronization between the terminal and the notebook computer.

6. A mobile terminal, comprising:
a detecting module (50) configured to detect an object material currently in contact with the terminal by determining object material data, wherein the object material data comprise inductance and/or capacitance data;
a storing module (52) configured to store the detected object material data and an application mode input by a user;
a comparing module (54) configured to compare the object material data detected by the detecting module (50) with object material data stored in the storing module (52); and
a configuring module (56) configured to: when a comparison result of the comparing module (54) is that the object material data detected by the detecting module (50) is the same as the object material data stored in the storing module (52), configure an application mode of the terminal as an application mode corresponding to the object material data stored in the terminal;.
the mobile terminal further comprising an adding module (58), wherein, when the comparison result of the comparing module (54) is that the object material data detected by the detecting module (50) is different from all object material data stored in the storing module (52), the adding module is configured to send, to the storing module (52), the object material data detected by the detecting module (50) and the application mode input by the user;
wherein the terminal is one of the following types of devices: a mobile phone, a man-machine interaction terminal, an e-book, an audio and video player or a personal digital assistant;
the mobile terminal further comprising a wireless connection enabling module, wherein, when the detected object material is a case material of a notebook computer, the wireless connection enabling module is configured to enable a wireless connection function and to perform data synchronization between the terminal and the notebook computer.

7. The mobile terminal according to claim 6,
wherein the detecting module (80) is further configured to detect auxiliary information;
wherein the storing module (82) is further configured to store the detected auxiliary information;
wherein the comparing module (84) is configured to compare the object material data and the auxiliary information that are detected by the detecting module (80) with object material data and auxiliary information that are stored in the storing module (82); and
wherein the configuring module (86) is further configured to: when a comparison result of the comparing module (84) is that the object material data and the auxiliary information that are detected by the detecting module (80) are the same as the object material data and the auxiliary information that are stored in the storing module (82), configure an application mode of the terminal as an application mode corresponding to the object material data and the auxiliary information that are stored in the storing module (82).

8. The mobile terminal corresponding to claim 7, further comprising an adding module (88), wherein, when the comparison result of the comparing module (84) is that the object material data and the auxiliary information that are detected by the detecting module (80) are different from all object material data and auxiliary information that are stored in the storing module (82), the adding module is configured to send, to the storing module (82), the application mode input by the user and the detected object material data and auxiliary information.

9. The mobile terminal according to claim 7 or 8, further comprising a wireless connection enabling module (89), wherein, when the detected object material is a case material of a notebook computer and the auxiliary information meets a preset condition, the wireless connection enabling module (89) is configured to enable a wireless connection function and to perform data synchronization between the terminal and the notebook computer.

10. The mobile terminal according to any one of claims 6 to 7, wherein the mobile terminal is a cell phone, and the cell phone further comprises: a sensor, a case, a circuit board, a processor, a touchscreen, a radio frequency circuit, a microphone, a speaker, and a power supply, wherein
the sensor is configured to detect an object material currently in contact with the terminal and to transmit detected information to the processor;
the touchscreen is disposed on the case, the circuit board is disposed inside a space enclosed by the case, and the processor and the radio frequency circuit are disposed on the circuit board;
the processor comprises all or a part of the modules;
the processor is configured to process data which is input through the touchscreen and/or to output a processed data result through the touchscreen;
the radio frequency circuit is configured to establish communication between the cell phone and a wireless network and to implement data receiving and sending between the cell phone and the wireless network;
the microphone is configured to collect a sound and convert the collected sound to sound data, and the cell phone is configured to send the sound data to the wireless network through the radio frequency circuit;
the speaker is configured to restore the sound data to a sound and play the sound for the user, wherein the cell phone is configured to receive the sound data from the wireless network through the radio frequency circuit; and
the power supply is configured to supply power to all circuits or components of the cell phone.

## Patentansprüche

1. Verfahren zum Auslegen eines Anwendungsmodus eines Endgeräts, das die folgenden Schritte umfasst:
Detektieren (10) eines Objektmaterials, das derzeit mit dem Endgerät in Kontakt ist, durch Bestimmen von Objektmaterialdaten, wobei die Objektmaterialdaten Induktivitäts- und/oder Kapazitätsdaten umfassen;
Vergleichen (12) der detektierten Objektmaterialdaten mit Objektmaterialdaten, die im Endgerät gespeichert sind; und,
wenn die detektierten Objektmaterialdaten dieselben sind wie die Objektmaterialdaten, die im Endgerät gespeichert sind, Auslegen (14) eines Anwendungsmodus des Endgeräts als einen Anwendungsmodus, der den Objektmaterialdaten, die im Endgerät gespeichert sind, entspricht;
wobei, wenn sich die detektierten Objektmaterialdaten von allen Objektmaterialdaten, die im Endgerät gespeichert sind, unterscheiden, das Verfahren ferner die folgenden Schritte umfasst:
Speichern (20) der detektierten Objektmaterialdaten und eines Anwendungsmodus, der von einem Benutzer eingegeben wurde, im Endgerät;
wobei das Endgerät einer der folgenden Typen von Vorrichtungen ist: ein Mobiltelefon, ein Mensch-Maschine-Interaktionsendgerät, ein E-Buch, ein Audio- und Videoplayer oder ein persönlicher digitaler Assistent;
wobei, wenn das detektierte Objektmaterial ein Gehäusematerial eines Notebookcomputers ist, das Verfahren ferner die folgenden Schritte umfasst:
Aktivieren einer Drahtlosverbindungsfunktion und Durchführen einer Datensynchronisation zwischen dem Endgerät und dem Notebookcomputer.

2. Verfahren nach Anspruch 1, das ferner die folgenden Schritte umfasst:
Detektieren (30) des Objektmaterials, das derzeit mit dem Endgerät in Kontakt ist, durch Detektieren von Zusatzinformationen;
Vergleichen (32) der detektierten Objektmaterialdaten und Zusatzinformationen mit Objektmaterialdaten und Zusatzinformationen, die im Endgerät gespeichert sind; und,
wenn die detektierten Objektmaterialdaten und Zusatzinformationen dieselben sind, wie die Objektmaterialdaten und Zusatzinformationen, die im Endgerät gespeichert sind, Auslegen (34) eines Anwendungsmodus des Endgeräts als einen Anwendungsmodus, der den Objektmaterialdaten und Zusatzinformationen, die im Endgerät gespeichert sind, entspricht.

3. Verfahren nach Anspruch 2, wobei die Zusatzinformationen eine Kombination von einem oder mehrerem von Folgendem umfassen: geografische Position, Zeit, Datum, Bewegungsstatus des Endgeräts und Helligkeitsstatus einer Umgebung, in der sich das Endgerät befindet.

4. Verfahren nach Anspruch 2 oder 3, wobei, wenn sich die detektierten Objektmaterialdaten und Zusatzinformationen von allen Objektmaterialdaten und Zusatzinformationen, die im Endgerät gespeichert sind, unterscheiden, das Verfahren ferner die folgenden Schritte umfasst:
Speichern (40) der detektierten Objektmaterialdaten und Zusatzinformationen und
eines Anwendungsmodus, der von einem Benutzer eingegeben wurde, im Endgerät.

5. Verfahren nach Anspruch 2 oder 3, wobei, wenn das detektierte Objektmaterial ein Gehäusematerial eines Notebookcomputers ist und die Zusatzinformationen eine voreingestellte Bedingung erfüllen, das Verfahren ferner die folgenden Schritte umfasst:
Aktivieren einer Drahtlosverbindungsfunktion und Durchführen einer Datensynchronisation zwischen dem Endgerät und dem Notebookcomputer.

6. Mobiles Endgerät, das Folgendes umfasst:
ein Detektionsmodul (50), das dazu ausgelegt ist, ein Objektmaterial, das derzeit mit dem Endgerät in Kontakt ist, durch Bestimmen von Objektmaterialdaten zu detektieren, wobei die Objektmaterialdaten Induktivitäts- und/oder Kapazitätsdaten umfassen;
ein Speichermodul (52), das dazu ausgelegt ist, die detektierten Objektmaterialdaten und einen Anwendungsmodus, der von einem Benutzer eingegeben wurde, im Endgerät zu speichern;
ein Vergleichsmodul (54), das dazu ausgelegt ist, die Objektmaterialdaten, die vom Detektionsmodul (50) detektiert wurden, mit Objektmaterialdaten, die im Speichermodul (52) gespeichert sind, zu vergleichen; und
ein Auslegungsmodul (56), das zu Folgendem ausgelegt ist: wenn ein Vergleichsergebnis des Vergleichsmoduls (54) darin besteht, dass die Objektmaterialdaten, die vom Detektionsmodul (50) detektiert wurden, dieselben sind wie die Objektmaterialdaten, die im Speichermodul (52) gespeichert sind, Auslegen eines Anwendungsmodus des Endgeräts als einen Anwendungsmodus, der den Objektmaterialdaten, die im Endgerät gespeichert sind, entspricht;
wobei das mobile Endgerät ferner ein Hinzufügungsmodul (58) umfasst, wobei, wenn das Vergleichsergebnis des Vergleichsmoduls (54) darin besteht, dass sich die Objektmaterialdaten, die vom Detektionsmodul (50) detektiert wurden, von allen Objektmaterialdaten, die im Speichermodul (52) gespeichert sind, unterscheiden, das Hinzufügungsmodul dazu ausgelegt ist, die Objektmaterialdaten, die vom Detektionsmodul (50) detektiert wurden, und den Anwendungsmodus, der vom Benutzer eingegeben wurde, an das Speichermodul (52) zu senden;
wobei das Endgerät einer der folgenden Typen von Vorrichtungen ist: ein Mobiltelefon, ein Mensch-Maschine-Interaktionsendgerät, ein E-Buch, ein Audio- und Videoplayer oder ein persönlicher digitaler Assistent;
wobei das mobile Endgerät ferner ein Drahtlosverbindungsaktivierungsmodul umfasst, wobei, wenn das detektierte Objektmaterial ein Gehäusematerial eines Notebookcomputers ist, das Drahtlosverbindungsaktivierungsmodul dazu ausgelegt ist, eine Drahtlosverbindungsfunktion zu aktivieren und eine Datensynchronisation zwischen dem Endgerät und dem Notebookcomputer durchzuführen.

7. Mobiles Endgerät nach Anspruch 6,
wobei das Detektionsmodul (80) ferner dazu ausgelegt ist, Zusatzinformationen zu detektieren;
wobei das Speichermodul (82) ferner dazu ausgelegt ist, die detektierten Zusatzinformationen zu speichern;
wobei das Vergleichsmodul (84) dazu ausgelegt ist, die Objektmaterialdaten und Zusatzinformationen, die vom Detektionsmodul (80) detektiert werden, mit Objektmaterialdaten und Zusatzinformationen, die im Speichermodul (82) gespeichert sind, zu vergleichen; und
wobei das Auslegungsmodul (86) ferner zu Folgendem ausgelegt ist: wenn ein Vergleichsergebnis des Vergleichsmoduls (84) darin besteht, dass die Objektmaterialdaten und Zusatzinformationen, die vom Detektionsmodul (80) detektiert werden, dieselben sind wie die Objektmaterialdaten und Zusatzinformationen, die im Speichermodul (82) gespeichert sind, Auslegen eines Anwendungsmodus des Endgeräts als einen Anwendungsmodus, der den Objektmaterialdaten und Zusatzinformationen, die im Speichermodul (82) gespeichert sind, entspricht.

8. Mobiles Endgerät, das Anspruch 7 entspricht, das ferner ein Hinzufügungsmodul (88) umfasst, wobei, wenn das Vergleichsergebnis des Vergleichsmoduls (84) darin besteht, dass sich die Objektmaterialdaten und Zusatzinformationen, die vom Detektionsmodul (80) detektiert werden, von allen Objektmaterialdaten und Zusatzinformationen, die im Speichermodul (82) gespeichert sind, unterscheiden, das Hinzufügungsmodul dazu ausgelegt ist, den Anwendungsmodus, der vom Benutzer eingegeben wurde, und die detektierten Objektmaterialdaten und Zusatzinformationen an das Speichermodul (82) zu senden.

9. Mobiles Endgerät nach Anspruch 7 oder 8, das ferner ein Drahtlosverbindungsaktivierungsmodul (89) umfasst, wobei, wenn das detektierte Objektmaterial ein Gehäusematerial eines Notebookcomputers ist und die Zusatzinformationen eine voreingestellte Bedingung erfüllen, das Drahtlosverbindungsaktivierungsmodul (89) dazu ausgelegt ist, eine Drahtlosverbindungsfunktion zu aktivieren und eine Datensynchronisation zwischen dem Endgerät und dem Notebookcomputer durchzuführen.

10. Mobiles Endgerät nach einem der Ansprüche 6 oder 7, wobei das mobile Endgerät ein Zelltelefon ist und das Zelltelefon ferner Folgendes umfasst: einen Sensor, ein Gehäuse, eine Leiterplatte, einen Prozessor, einen Touchscreen, eine Funkfrequenzschaltung, ein Mikrofon, einen Lautsprecher und eine Stromversorgung, wobei
der Sensor dazu ausgelegt ist, ein Objektmaterial, das derzeit mit dem Endgerät in Kontakt ist, zu detektieren und die detektierten Informationen zum Prozessor zu übertragen;
der Touchscreen am Gehäuse angeordnet ist, die Leiterplatte in einem Raum, der vom Gehäuse umschlossen ist, angeordnet ist und der Prozessor und die Funkfrequenzschaltung auf der Leiterplatte angeordnet sind;
der Prozessor alle oder einen Teil der Module umfasst;
der Prozessor dazu ausgelegt ist, Daten, die über den Touchscreen eingegeben werden, zu verarbeiten und/oder ein verarbeitetes Datenergebnis über den Touchscreen auszugeben;
die Funkfrequenzschaltung dazu ausgelegt ist, zwischen dem Zelltelefon und einem drahtlosen Netzwerk eine Kommunikation herzustellen und zwischen dem Zelltelefon und dem drahtlosen Netzwerk ein Empfangen und Senden von Daten zu implementieren;
das Mikrofon dazu ausgelegt ist, einen Ton zu sammeln und den gesammelten Ton in Tondaten umzuwandeln, und das Zelltelefon dazu ausgelegt ist, die Tondaten über die Funkfrequenzschaltung an das drahtlose Netzwerk zu senden;
der Lautsprecher dazu ausgelegt ist, die Tondaten zu einem Ton wiederherzustellen und den Ton für den Benutzer wiederzugeben, wobei das Zelltelefon dazu ausgelegt ist, die Tondaten über die Funkfrequenzschaltung vom drahtlosen Netzwerk zu empfangen; und
die Stromversorgung dazu ausgelegt ist, Strom an alle Schaltungen oder Komponenten des Zelltelefons zu liefern.

## Revendications

1. Procédé de configuration d'un mode d'application d'un terminal, comprenant les étapes de :
la détection (10) d'une matière d'objet actuellement en contact avec le terminal en déterminant des données de matière d'objet, les données de matière d'objet comprenant des données d'inductance et/ou de capacité ;
la comparaison (12) des données de matière d'objet détectées avec les données de matière d'objet enregistrées dans le terminal ; et
lorsque les données de matière d'objet détectées sont les mêmes que les données de matière d'objet enregistrées dans le terminal, la configuration (14) d'un mode d'application du terminal comme mode d'application correspondant aux données de matière d'objet enregistrées dans le terminal ;
lorsque les données de matière d'objet détectées sont différentes de toutes les données de matière d'objet enregistrées dans le terminal, le procédé comprenant en outre les étapes de :
la sauvegarde (20), sur le terminal, des données de matière d'objet détectées et d'un mode d'application saisi par un utilisateur ;
le terminal étant l'un des types de dispositifs suivants : un téléphone mobile, un terminal d'interaction homme-machine, un livre électronique, un lecteur audio et vidéo ou un assistant numérique personnel ;
lorsque la matière d'objet détectée est une matière de boîtier d'un ordinateur portable, le procédé comprenant en outre les étapes de :
l'activation d'une fonction de connexion sans fil et la réalisation d'une synchronisation des données entre le terminal et l'ordinateur portable.

2. Procédé selon la revendication 1, comprenant en outre les étapes de :
la détection (30) de la matière d'objet actuellement en contact avec le terminal en détectant des informations auxiliaires ;
la comparaison (32) des données de matière d'objet et des informations auxiliaires détectées avec les données de matière d'objet et les informations auxiliaires qui sont enregistrées dans le terminal ; et,
lorsque les données de matière d'objet et les informations auxiliaires détectées sont identiques aux données de matière d'objet et aux informations auxiliaires qui sont enregistrées dans le terminal, la configuration (34) d'un mode d'application du terminal comme mode d'application correspondant aux données de matière d'objet et aux informations auxiliaires qui sont enregistrées dans le terminal.

3. Procédé selon la revendication 2, les informations auxiliaires comprenant une combinaison d'un ou plusieurs des éléments suivants :
la position géographique, l'heure, la date, l'état de déplacement du terminal et l'état de luminosité d'un environnement où le terminal est situé.

4. Procédé selon la revendication 2 ou 3, lorsque les données de matière d'objet et les informations auxiliaires détectées sont différentes de toutes les données de matière d'objet et des informations auxiliaires qui sont enregistrées dans le terminal, le procédé comprenant en outre les étapes de :
la sauvegarde (40), sur le terminal, des données de matière d'objet et des informations auxiliaires détectées, et d'un mode d'application saisi par un utilisateur.

5. Procédé selon la revendication 2 ou 3, lorsque la matière d'objet détectée est une matière de boîtier d'un ordinateur portable et que les informations auxiliaires satisfont à une condition prédéfinie, le procédé comprenant en outre les étapes de :
l'activation d'une fonction de connexion sans fil et la réalisation d'une synchronisation des données entre le terminal et l'ordinateur portable.

6. Terminal mobile, comprenant :
un module de détection (50) configuré pour détecter une matière d'objet actuellement en contact avec le terminal en déterminant des données de matière d'objet, les données de matière d'objet comprenant des données d'inductance et/ou de capacité ;
un module d'enregistrement (52) configuré pour enregistrer les données de matière d'objet détectées et un mode d'application saisi par un utilisateur ;
un module de comparaison (54) configuré pour comparer les données de matière d'objet détectées par le module de détection (50) avec des données de matière d'objet enregistrées dans le module d'enregistrement (52) ; et
un module de configuration (56) configuré pour :
lorsqu'un résultat de comparaison du module de comparaison (54) est que les données de matière d'objet détectées par le module de détection (50) sont les mêmes que les données de matière d'objet enregistrées dans le module d'enregistrement (52), configurer un mode d'application du terminal comme mode d'application correspondant aux données de matière d'objet enregistrées dans le terminal ;
le terminal mobile comprenant en outre un module d'addition (58), lorsque le résultat de comparaison du module de comparaison (54) est que les données de matière d'objet détectées par le module de détection (50) sont différentes de toutes les données de matière d'objet enregistrées dans le module d'enregistrement (52), le module d'addition étant configuré pour envoyer, au module d'enregistrement (52), les données de matière d'objet détectées par le module de détection (50) et le mode d'application saisi par l'utilisateur ;
le terminal étant l'un des types de dispositifs suivants :
un téléphone portable, un terminal d'interaction homme-machine, un livre électronique, un lecteur audio et vidéo ou un assistant numérique personnel ;
le terminal mobile comprenant en outre un module d'activation de connexion sans fil, lorsque la matière d'objet détectée est une matière de boîtier d'un ordinateur portable, le module d'activation de connexion sans fil étant configuré pour activer une fonction de connexion sans fil et pour réaliser une synchronisation de données entre le terminal et l'ordinateur portable.

7. Terminal mobile selon la revendication 6,
le module de détection (80) étant en outre configuré pour détecter des informations auxiliaires ;
le module d'enregistrement (82) étant en outre configuré pour enregistrer les informations auxiliaires détectées ;
le module de comparaison (84) étant configuré pour comparer les données de matière d'objet et les informations auxiliaires qui sont détectées par le module de détection (80) avec les données de matière d'objet et les informations auxiliaires qui sont enregistrées dans le module d'enregistrement (82) ; et
le module de configuration (86) étant en outre configuré pour :
lorsqu'un résultat de comparaison du module de comparaison (84) est que les données de matière d'objet et les informations auxiliaires qui sont détectées par le module de détection (80) sont identiques aux données de matière d'objet et aux informations auxiliaires qui sont enregistrées dans le module d'enregistrement (82), configurer un mode d'application du terminal comme mode d'application correspondant aux données de matière d'objet et aux informations auxiliaires qui sont enregistrées dans le module d'enregistrement (82).

8. Terminal mobile correspondant à la revendication 7, comprenant en outre un module d'addition (88), lorsque le résultat de comparaison du module de comparaison (84) est que les données de matière d'objet et les informations auxiliaires qui sont détectées par le module de détection (80) sont différentes de toutes les données de matière d'objet et des informations auxiliaires qui sont enregistrées dans le module d'enregistrement (82), le module d'addition étant configuré pour envoyer au module d'enregistrement (82) le mode d'application saisi par l'utilisateur et les données de matière d'objet et informations auxiliaires détectées.

9. Terminal mobile selon la revendication 7 ou 8, comprenant en outre un module d'activation de connexion sans fil (89), lorsque la matière d'objet détectée est une matière de boîtier d'un ordinateur portable et que les informations auxiliaires satisfont à une condition prédéfinie, le module d'activation de connexion sans fil (89) étant configuré pour activer une fonction de connexion sans fil et pour réaliser une synchronisation des données entre le terminal et l'ordinateur portable.

10. Terminal mobile selon l'une quelconque des revendications 6 à 7, le terminal mobile étant un téléphone cellulaire, et le téléphone cellulaire comprenant en outre :
un capteur, un boîtier, une carte de circuit imprimé, un processeur, un écran tactile, un circuit radiofréquence, un microphone, un haut-parleur et une alimentation électrique, le capteur étant configuré pour détecter une matière d'objet actuellement en contact avec le terminal et pour transmettre les informations détectées au processeur ;
l'écran tactile étant disposé sur le boîtier, la carte de circuit imprimé étant disposée à l'intérieur d'un espace fermé par le boîtier et le processeur et le circuit radiofréquence étant disposés sur la carte de circuit imprimé ;
le processeur comprenant tout ou partie des modules ;
le processeur étant configuré pour traiter les données qui sont saisies via l'écran tactile et/ou pour délivrer un résultat de données traitées via l'écran tactile ;
le circuit radiofréquence étant configuré pour établir une communication entre le téléphone cellulaire et un réseau sans fil et pour mettre en oeuvre la réception et l'envoi de données entre le téléphone cellulaire et le réseau sans fil ;
le microphone étant configuré pour collecter un son et convertir le son collecté en données sonores, et le téléphone cellulaire étant configuré pour envoyer les données sonores au réseau sans fil via le circuit radiofréquence ;
le haut-parleur étant configuré pour restaurer les données sonores en un son et jouer le son pour l'utilisateur, le téléphone cellulaire étant configuré pour recevoir les données sonores du réseau sans fil via le circuit de radiofréquence ; et
l'alimentation étant configurée pour alimenter tous les circuits ou composants du téléphone cellulaire.
